# EUROPEAN PATENT APPLICATION

(11) **EP 4 765 674 A1**
(43) Date of publication of application: **24.06.2026**
(21) Application number: 24870875.2
(22) Date of filing: 26.09.2024
(51) Int. Cl.: H04B 7/185

(54) **SATELLITE COMMUNICATION METHOD AND APPARATUS**

(30) Priority: 27.09.2023 CN 202311273387
(71) Applicant: HUAWEI TECHNOLOGIES CO., LTD., Shenzhen 518129 (CN)
(72) Inventor: CHEN, Ying, Shenzhen, Guangdong 518129 (CN); ZHANG, Jiayin, Shenzhen, Guangdong 518129 (CN)
(74) Representative: Goddar, Heinz J.
(86) International application number: PCT/CN2024/121437
(87) International publication number: WO 2025/067335

(57) **Abstract**

A satellite communication method and apparatus are provided, and are applied to the field of communication technologies. The method includes: A first communication apparatus may determine that the first communication apparatus is allowed to perform a GNSS measurement **in** a C-DRX inactive state, and then perform the GNSS measurement based on a relationship between an end moment of the C-DRX inactive state and a GNSS validity period. In an example, the end moment of the C-DRX inactive state may be within the GNSS validity period. In another example, the end moment of the C-DRX inactive state may be outside the GNSS validity period. Based on different relationships, the first communication apparatus may perform the GNSS measurement in different time periods, or report GNSS validity duration at different times, or the like. The method can effectively increase duration in which the first communication apparatus maintains a connection.

## Description

This application claims priority to Chinese Patent Application No. 202311273387.3, filed with the China National Intellectual Property Administration on September 27, 2023 and entitled "SATELLITE COMMUNICATION METHOD AND APPARATUS", which is incorporated herein by reference in its entirety.

### TECHNICAL FIELD

This application relates to the field of communication technologies, and in particular, to a satellite communication method and an apparatus.

### BACKGROUND

Compared with terrestrial communication, satellite communication has unique advantages. For example, the satellite communication can provide wider coverage areas, and satellite base stations are not vulnerable to natural disasters or external forces. The satellite communication may be introduced to provide communication services for some areas that cannot be covered by terrestrial communication networks, such as oceans and forests; reliability of the communication can be enhanced, for example, it is ensured that airplanes, trains, and users on those transportation obtain better communication services; and more data transmission resources can be provided for the communication, to improve network rates. Therefore, supporting both the terrestrial communication and the satellite communication has great benefits in terms of wide coverage, reliability, multi-connection, and high throughput.

Currently, the satellite communication has been introduced into a 3rd generation partnership project (3rd generation partnership project, 3GPP) standard, is used as a communication scenario of 5th generation (5th generation, 5G) communication, and is referred to as a non-terrestrial network (non-terrestrial network, NTN). The NTN not only can support various 5G terminal devices, but also can support terminal devices of an internet of things (internet of things, IoT) type. A most distinguishing feature of satellite communication is high mobility and a large communication latency. Therefore, different from terrestrial communication, satellite communication requires a terminal device to implement synchronization on a basis of uplink synchronization based on information such as a global navigation satellite system (global navigation satellite system, GNSS) or an ephemeris. For example, the terminal device may maintain a connected state within specific validity duration after reporting GNSS information, and a terminal device enters an idle state after the GNSS fails.

However, in the foregoing method, the terminal device continuously initiates random access to enter the connected state and exit the connected state. Consequently, the terminal device cannot maintain a connection for a long period of time.

### SUMMARY

Embodiments of this application provide a satellite communication method and apparatus, to effectively increase duration in which a terminal device maintains a connection (for example, duration in which a connected state is maintained).

According to a first aspect, an embodiment of this application provides a satellite communication method. The method is applied to a first communication apparatus, the first communication apparatus may be a terminal device, or may be a processor, a module, a chip, a chip system, or the like that is in the terminal device and that implements the method, and the method includes:

The first communication apparatus determines that the first communication apparatus is allowed to perform a GNSS measurement in a connected-discontinuous reception (connected-discontinuous reception, C-DRX) inactive state; and the first communication apparatus performs the GNSS measurement based on a relationship between an end moment of the C-DRX inactive state and a GNSS validity period of the first communication apparatus.

In this embodiment of this application, the first communication apparatus is allowed to perform the GNSS measurement in the C-DRX inactive state. The first communication apparatus can perform the GNSS measurement before an end moment of the GNSS validity period, to obtain new GNSS information and validity duration of the GNSS information. Therefore, the first communication apparatus can continue to maintain uplink synchronization, to increase duration in which the first communication apparatus maintains a connection. In addition, resources (for example, resources occupied because a timer is started) occupied when the first communication apparatus performs the GNSS measurement in an active state can be effectively reduced, thereby effectively saving resources in the active state.

In a possible implementation, that the first communication apparatus performs the GNSS measurement based on the relationship between the end moment of the C-DRX inactive state and the GNSS validity period of the first communication apparatus includes: The first communication apparatus performs the GNSS measurement in the C-DRX inactive state when the end moment of the C-DRX inactive state is within the GNSS validity period.

In a possible implementation, the method further includes: When the first communication apparatus completes the GNSS measurement in the C-DRX inactive state, the first communication apparatus feeds back GNSS validity duration or remaining GNSS validity duration of the first communication apparatus after the C-DRX inactive state ends.

In a possible implementation, that the first communication apparatus performs the GNSS measurement based on the relationship between the end moment of the C-DRX inactive state and the GNSS validity period of the first communication apparatus includes: When the end moment of the C-DRX inactive state is outside the GNSS validity period, the first communication apparatus starts a timer at an end moment of the GNSS validity period, and performs the GNSS measurement based on the timer.

In a possible implementation, when an end moment of the timer is in an active state of the first communication apparatus, an end moment at which the first communication apparatus completes the GNSS measurement is the same as the end moment of the timer.

In a possible implementation, when an end moment of the timer is in an active state of the first communication apparatus, the method further includes: The first communication apparatus feeds back GNSS validity duration or remaining GNSS validity duration of the first communication apparatus after the end moment of the timer when the GNSS measurement is completed within timing duration of the timer; or the first communication apparatus sends feedback information through random access when the GNSS measurement is completed in the active state, where the feedback information indicates that the first communication apparatus has completed the GNSS measurement; or when the GNSS measurement is completed in the inactive state, the first communication apparatus sends feedback information through random access after entering the active state, where the feedback information indicates that the first communication apparatus has completed the GNSS measurement; or when the GNSS measurement is not completed within timing duration of the timer, the first communication apparatus enters an idle state, where a latest time at which the first communication apparatus enters the idle state is an end moment of the timer.

In a possible implementation, when an end moment of the timer is in the inactive state of the first communication apparatus, the method further includes: The first communication apparatus feeds back GNSS validity duration or remaining GNSS validity duration of the first communication apparatus after the end moment of the timer when the GNSS measurement is completed within timing duration of the timer; or the first communication apparatus enters an idle state after the end moment of the timer when the GNSS measurement is not completed within timing duration of the timer.

According to a second aspect, an embodiment of this application provides a first communication apparatus, configured to perform the method according to any one of the first aspect or the possible implementations of the first aspect. The first communication apparatus includes a unit that performs the method according to any one of the first aspect or the possible implementations of the first aspect. For example, the first communication apparatus may be a terminal device, a chip, or a functional module, and the chip or the functional module may be applied to the terminal device.

According to a third aspect, an embodiment of this application provides a first communication apparatus. The first communication apparatus includes a processor, configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

In a possible implementation, the memory is located outside the first communication apparatus.

In a possible implementation, the memory is located inside the first communication apparatus.

In this embodiment of this application, the processor and the memory may alternatively be integrated into one device. In other words, the processor and the memory may alternatively be integrated together. For example, the first communication apparatus may be a chip.

In a possible implementation, the first communication apparatus further includes a transceiver. The transceiver is configured to receive a signal or send a signal. For example, the transceiver may be further configured to report feedback information (for example, GNSS validity duration). For example, the transceiver may be further configured to receive trigger information. For example, the first communication apparatus may be a terminal device.

According to a fourth aspect, an embodiment of this application provides a first communication apparatus. The first communication apparatus includes a logic circuit and an interface. The logic circuit is coupled to the interface. The interface is configured to input and/or output information. The logic circuit is configured to perform the method according to the first aspect or any possible implementation.

For example, that the interface is configured to input the information may include: The interface is configured to input trigger information. That the interface is configured to output the information may include: The interface is configured to output feedback information, and the like. For example, the logic circuit is configured to perform a GNSS measurement.

According to a fifth aspect, an embodiment of this application provides a computer-readable storage medium. The computer-readable storage medium is configured to store a computer program, and when the computer program is run on a computer, the method according to the first aspect or any possible implementation is performed.

According to a sixth aspect, an embodiment of this application provides a computer program product. The computer program product includes a computer program or computer code, and when the computer program or the computer code is run on a computer, the method according to the first aspect or any possible implementation is performed.

According to a seventh aspect, an embodiment of this application provides a computer program. When the computer program is run on a computer, the method according to the first aspect or any possible implementation is performed.

According to an eighth aspect, an embodiment of this application provides a communication system. The communication system includes a first communication apparatus and a second communication apparatus, the first communication apparatus is configured to perform the method according to any one of the first aspect or the possible implementations of the first aspect, and the second communication apparatus is configured to receive feedback information.

### BRIEF DESCRIPTION OF DRAWINGS

FIG. 1 is a diagram of an architecture of a communication system according to an embodiment of this application;
FIG. 2a is a diagram of a satellite communication system in a transparent transmission scenario according to an embodiment of this application;
FIG. 2b and FIG. 2c are diagrams of a satellite communication system in a regeneration scenario according to an embodiment of this application;
FIG. 3a is a diagram of a method of a GNSS measurement mechanism according to an embodiment of this application;
FIG. 3b is a diagram of a GNSS measurement scenario according to an embodiment of this application;
FIG. 4a is a diagram of a method of another GNSS measurement mechanism according to an embodiment of this application;
FIG. 4b is a diagram of another GNSS measurement scenario according to an embodiment of this application;
FIG. 5 is a schematic flowchart of a satellite communication method according to an embodiment of this application;
FIG. 6a is a diagram of still another GNSS measurement scenario according to an embodiment of this application;
FIG. 6b is a diagram of still another GNSS measurement scenario according to an embodiment of this application;
FIG. 7 is a diagram of still another GNSS measurement scenario according to an embodiment of this application;
FIG. 8a is a diagram of still another GNSS measurement scenario according to an embodiment of this application;
FIG. 8b is a diagram of still another GNSS measurement scenario according to an embodiment of this application;
FIG. 8c is a diagram of still another GNSS measurement scenario according to an embodiment of this application;
FIG. 8d is a diagram of still another GNSS measurement scenario according to an embodiment of this application;
FIG. 8e is a diagram of still another GNSS measurement scenario according to an embodiment of this application;
FIG. 8f is a diagram of still another GNSS measurement scenario according to an embodiment of this application;
FIG. 9 is a diagram of still another GNSS measurement scenario according to an embodiment of this application;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of still another communication apparatus according to an embodiment of this application.

### DESCRIPTION OF EMBODIMENTS

For ease of understanding technical solutions of this application, the following further describes this application with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

In this application, "at least one (item)" means one or more, "a plurality of" means two or more, "at least two (items)" means two, three, or more, and "and/or" is used to describe an association relationship between associated objects, and indicates that three relationships may exist. For example, "A and/or B" may indicate: only A exists, only B exists, and both A and B exist, where A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

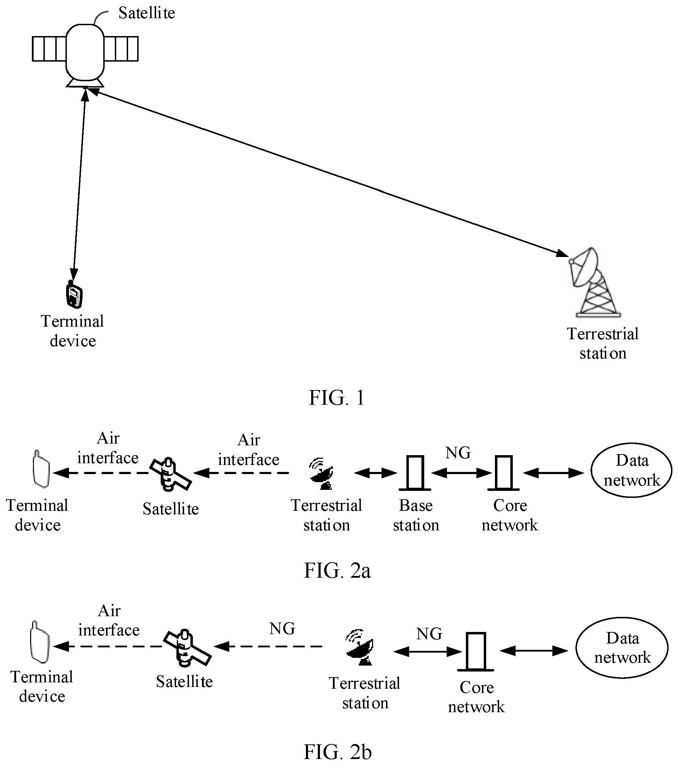

A method provided in embodiments of this application may be applied to a non-terrestrial network (non-terrestrial networks, NTN) communication system. As shown in FIG. 1, the communication system may include a terminal device, a satellite, and a terrestrial station (which may also be referred to as a gateway station). It may be understood that FIG. 1 shows only one satellite and one terrestrial station. In actual use, an architecture with a plurality of satellites and/or a plurality of terrestrial stations may be used according to a requirement. Each satellite may provide a service for one or more terminal devices, each satellite may correspond to one or more terrestrial stations, each terrestrial station may correspond to one or more satellites, and the like. This is not specifically limited in embodiments of this application. The method provided in embodiments of this application may be applied to an internet of things (internet of things, IoT) system, a vehicle-to-X (Vehicle-to-X, V2X), and a narrowband internet of things (narrowband internet of things, NB-IoT) system. For another example, the method may be applied to an LTE frequency division duplex (frequency division duplex, FDD) system, an LTE time division duplex (time division duplex, TDD) system, a long term evolution (long term evolution, LTE) system, a 5th generation (5th generation, 5G) communication system, a 6th generation (6th generation, 6G) communication system, or a future communication system. This is not specifically limited in embodiments of this application.

The terminal device is an apparatus having a wireless transceiver function. The terminal device may communicate with an access network device (or referred to as an access device) in a radio access network (radio access network, RAN). The terminal device may also be referred to as user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor or outdoor terminal device, and a handheld or vehicle-mounted terminal device; or may be deployed on water (for example, on a ship). In a possible implementation, the terminal device may be a handheld device, a vehicle-mounted device, a wearable device, a sensor, a terminal device in the internet of things, a terminal device in the internet of vehicles, an uncrewed aerial vehicle, a terminal device in any form in a 5th generation (5th generation, 5G) network or a future network, or the like that has a wireless communication function. This is not limited in embodiments of this application. For example, communication may be further performed between terminal devices by using device-to-device (device-to-device, D2D) or machine-to-machine (machine-to-machine, M2M). The terminal device shown in embodiments of this application may alternatively be a device in the internet of things (internet of things, IoT). This IoT network may include, for example, the internet of vehicles. Communication manners in an internet of vehicles system are collectively referred to as vehicle-to-X (vehicle-to-X, V2X, where X may represent anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

The terrestrial station may be configured to connect a satellite and a base station, or a satellite and a core network. The satellite may provide a radio access service to the terminal device, schedule a radio resource to an accessed terminal device, and provide a reliable radio transmission protocol, a data encryption protocol, and the like. In an example, the satellite may be an artificial earth satellite, a high-altitude aircraft, or the like that serves as a wireless communication base station, for example, an evolved NodeB (evolved NodeB, eNB) and a next generation NodeB (next generation NodeB, gNB). In another example, the satellite may alternatively serve as a relay of these base stations, and transparently transmit signals of these base stations to the terminal device.

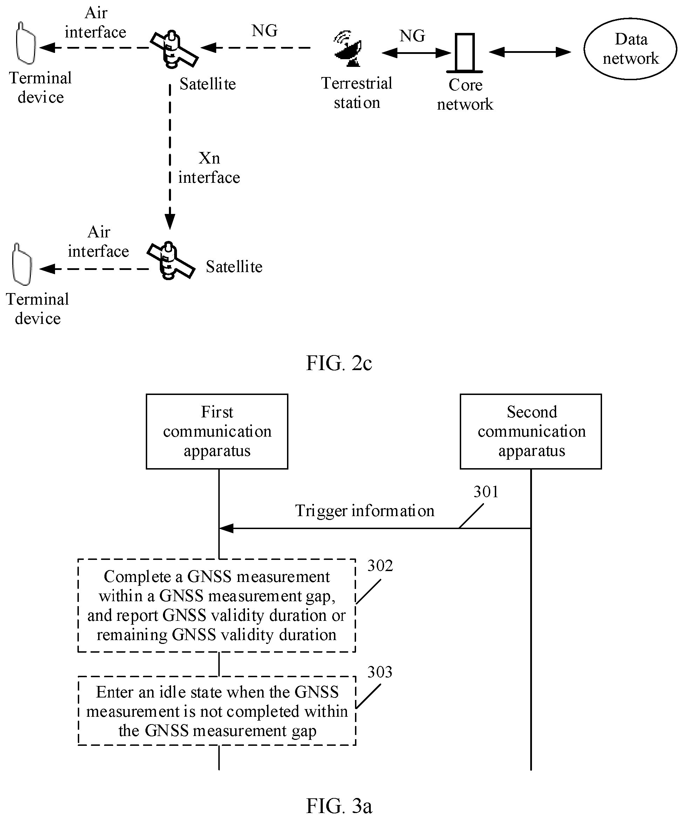

Therefore, in some implementations of this application, for example, in a satellite transparent transmission scenario, a network device may be the base station (which may also be referred to as a terrestrial base station) shown in FIG. 1. FIG. 2a is a diagram of a satellite communication system in a transparent transmission scenario according to an embodiment of this application. For example, a terminal device may access a network through an air interface (the air interface may be various types of air interfaces, for example, a 5G air interface), and a network device may be deployed on a terrestrial base station. A satellite is connected to a terrestrial station through a radio link. The terrestrial station and the terrestrial base station are connected to a core network in a wired or wireless manner. A radio link may exist between satellites. In the system shown in FIG. 2a, the satellite may have a transparent transmission and forwarding function. In some other implementations of this application, for example, in a regeneration scenario of the satellite, the network device may be the satellite shown in FIG. 1. FIG. 2b is a diagram of a satellite communication system in a regeneration scenario according to an embodiment of this application. For example, a terminal device may access a network through an air interface (the air interface may be various types of air interfaces, for example, a 5G air interface), and a network device may be deployed on a satellite (for example, in a regeneration mode of the satellite). For example, a base station or some functions of the base station are deployed on the satellite, and signaling exchange and user data transmission between base stations may be completed between satellites, as shown in FIG. 2c.

For example, network elements and interfaces between the network elements in FIG. 2a to FIG. 2c may be shown as follows.

The terminal device may access a satellite network through the air interface and initiates services such as calls and internet access. The base station may be configured to: provide a radio access service to the terminal device, schedule a radio resource to an accessed terminal device, and provide a reliable radio transmission protocol, a data encryption protocol, and the like. The terrestrial station may be configured to be responsible for forwarding signaling and service data between the satellite and the core network. The core network may be configured for user access control, mobility management, session management, user security authentication, charging, or the like. The core network may include a plurality of functional units, for example, functional entities including a control plane and a data plane. For example, the core network shown in FIG. 2a to FIG. 2c may include an access and mobility management function (access and mobility management function, AMF), a session management function (session management function, SMF), and a user plane function (user plane function, UPF). For example, the AMF may be configured to be responsible for user access management, security authentication, and mobility management. The UPF may be configured to be responsible for managing user plane data transmission and traffic statistics collection. The air interface shown in FIG. 2a to FIG. 2c may be understood as a radio link between a terminal device and the base station, or a radio link between the satellite and the terrestrial station. An Xn interface may be understood as an interface between base stations, and is mainly configured to exchange signaling such as handover. An NG interface may be used as an interface between the base station and the core network, and is configured to exchange signaling such as non-access stratum (non-access stratum, NAS) signaling of the core network and service data of a user. In systems using different radio access technologies, names of devices having a base station function may be different, and are not shown one by one in embodiments of this application.

The satellite may be a geostationary earth orbit (geostationary earth orbit, GEO) satellite, a medium earth orbit (medium earth orbit, MEO) satellite or a low earth orbit (low earth orbit, LEO) satellite in a non-geostationary earth orbit (non-geostationary earth orbit, NGEO), a high altitude platform station (high altitude platform station, HAPS), or the like. A specific type of the satellite is not limited in embodiments of this application.

In some deployments of the network device, the network device may include a central unit (central unit, CU), a distributed unit (distributed unit, DU), and the like. In some other deployment of the network device, the CU may further include a CU-control plane (control plane, CP) and a CU-user plane (user plane, UP). In still some other deployments of the network device, the network device may alternatively be of an open radio access network (open radio access network, ORAN) architecture or the like. A specific deployment manner of the network device is not limited in embodiments of this application. For example, when the network device is of the ORAN architecture, the network device in embodiments of this application may be an access network device in an ORAN, a functional module, or the like. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the like. The deployment manner of the network device listed herein is merely an example. With evolution of a standard technology, the network device may have another deployment manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions and the network architecture provided in embodiments of this application are also applicable to similar technical problems.

Currently, there is a communication method based on a short-time connection. In the method, a terminal device initiates random access, and exits a connected state after sending uplink data. In this process, GNSS information obtained by the terminal device before random access has specific validity duration. The GNSS information can remain valid before the terminal device exits an RRC connected state, because a synchronization requirement can be met even when the terminal device moves and a GNSS deviation is caused by movement. For a terminal device of an IoT-type, because an IoT service is characterized by short-packet periodic transmission, the communication method based on a short-time connection may be effectively applied to a terminal device characterized by short-packet periodic transmission.

However, in the foregoing method, the GNSS information obtained by the terminal device has specific validity duration (validity duration). After the GNSS information expires, the terminal device cannot continue to ensure the connection; and needs to exit the connected state and enter an idle state, and then needs to obtain the GNSS information again to initiate random access. The terminal device performs random access for a plurality of times to enter the connected state, and exiting the connected state causes excessively high signaling overheads. Alternatively, when the terminal device is in the connected state for a long period of time, the GNSS information expires. Therefore, the terminal device needs to obtain the GNSS information again. However, when the terminal device obtains the GNSS information again, communication and a GNSS measurement cannot be performed simultaneously. For example, when the terminal device performs the GNSS measurement, and consequently, cannot perform communication (for example, cannot send uplink data or cannot receive downlink data), especially, for the IoT service, a data packet periodicity of the IoT service is short, and communication cannot be performed during the GNSS measurement, thereby greatly affecting normal communication of the IoT service. For example, the validity duration may be duration determined by the terminal device based on information such as a moving speed of the terminal device, a relative location relationship between the terminal device and a satellite (for example, in a central area or an edge area covered by the satellite), or a relative speed between the terminal device and the satellite, and then reported by the terminal device to a network device.

In view of this, embodiments of this application provide a satellite communication method and apparatus. On a basis of implementing uplink synchronization by a terminal device, duration in which the terminal device maintains a connection can be increased (or referred to as that duration in which the terminal device is in a connected state is increased), so that the terminal device can be in the connected state for a long period of time. In this way, signaling overheads generated when the terminal device continuously enters the connected state and exits the connected state can be further avoided. Therefore, signaling overheads are reduced. In addition, the terminal device continuously enters the connected state and exits the connected state, which further consumes energy. In embodiments of this application, an energy loss can be further reduced.

The following describes terms related in embodiments of this application.

### GNSS measurement:

The GNSS measurement is a process of performing positioning based on a signal of a navigation satellite to obtain geographical location information. For example, the obtained geographical location information may be GNSS information, and the GNSS information may indicate information related to a geographical location of a terminal device, for example, coordinates X, Y, and Z, or information such as a longitude, a latitude, or a height. When obtaining the GNSS information, a first communication apparatus may obtain validity duration (for example, referred to as GNSS validity duration) of the GNSS information based on a location relationship, a speed relationship, or the like between the first communication apparatus and a satellite. The location relationship between the first communication apparatus and the satellite may include that the first communication apparatus is located in a central area or an edge area of a satellite coverage area, or an orbital height or an elevation angle of the satellite. The speed relationship between the first communication apparatus and the satellite may include a relative speed relationship between the first communication apparatus and the satellite, a moving speed of the first communication apparatus, or the like. For example, a larger moving speed of the terminal device may lead to shorter GNSS validity duration. For example, the GNSS validity duration may be at a second level, a hundred-second level, a minute level, or an hour level. This is not limited in embodiments of this application. For example, the GNSS validity duration may be any one of the following {10s, 20s, 30s, 40s, 50s, 60s, 5 min, 10 min, 15 min, 20 min, 25 min, 30 min, 60 min, 90 min, 120 min, infinity (infinity)}. Herein, min indicates minute, and s indicates second. For example, for a terminal device that does not move, or a terminal device with a small moving speed, for example, a terminal device whose moving speed is less than a threshold, GNSS information of the terminal device may be always valid. Therefore, the GNSS validity duration may be infinity. That the moving speed of the terminal device is small includes but is not limited to the following example: the moving speed of the terminal device is 1 meters/second (m/s) to 3 m/s for a user in a walking state; or the moving speed of the terminal device may be 10 kilometers/hour (km/h) for a user in a running state; or a moving speed of a vehicle in a running state may be 30 km/h to 60 km/h. For another example, it may also be understood that a moving speed of a terminal device in a slow-speed state relative to the satellite is small. The foregoing enumerated GNSS validity duration is merely an example, and should not be construed as a limitation on embodiments of this application.

The GNSS validity duration may also be referred to as a GNSS validity period, GNSS validity duration (GNSS validity duration), or the like. A specific name of the GNSS validity duration is not limited in embodiments of this application.

### GNSS measurement mechanism 1:

FIG. 3a is a diagram of a method of a GNSS measurement mechanism according to an embodiment of this application. As shown in FIG. 3a, the method includes the following steps.

301: A second communication apparatus sends trigger information. Correspondingly, a first communication apparatus receives the trigger information. The trigger information may be used to trigger the first communication apparatus to perform a GNSS measurement.

For example, the trigger information may also be used to trigger a terminal device to perform the GNSS measurement within a GNSS measurement gap (GNSS measurement gap). For example, the trigger information may be carried in a media access control control (media access control element, MAC CE) element or a radio resource control (radio resource control, RRC) element. For example, when a subframe (subframe) or a slot in which the first communication apparatus receives the MAC CE is n, a start time (start time) (or referred to as a start time, or referred to as a start moment) of the GNSS measurement gap may be n+X. For example, X may be a predefined value (predefined value), or a configured value (configured value) (for example, the MAC CE may include a value of X), or is related to a hybrid automatic repeat request (hybrid automatic repeat request, HARQ) feedback (HARQ feedback) of the MAC CE. A specific value of X is not limited in this embodiment of this application.

In an example, duration of the GNSS measurement gap (duration of the GNSS measurement gap) may be configured by a network device. For example, the MAC CE or the RRC may include the duration. Alternatively, before the network device sends the MAC CE or the RRC, the network device may send information indicating the duration. Correspondingly, the terminal device receives the information indicating the duration. In another example, the duration of the GNSS measurement gap may be reported by the terminal device to the network device based on a capability of the terminal device, and then the network device configures the duration by using the MAC CE or the RRC. In still another example, when the MAC CE or the RRC does not include the duration of the GNSS measurement gap, the duration may be equal to duration last reported by the terminal device. A specific manner of the start time and the duration of the GNSS measurement gap is not limited in this embodiment of this application.

302: The first communication apparatus completes the GNSS measurement within the GNSS measurement gap, and reports GNSS validity duration or remaining GNSS validity duration.

That the GNSS measurement is completed may also be referred to as that the GNSS measurement succeeds or the terminal device obtains valid GNSS information. That the first communication apparatus completes the GNSS measurement within the GNSS measurement gap indicates that the first communication apparatus obtains GNSS information by performing the GNSS measurement, and the GNSS information has specific validity duration (for example, referred to as GNSS validity duration). Reporting the GNSS validity duration or the remaining GNSS validity duration may also be referred to as feeding back the GNSS validity duration or the remaining GNSS validity duration.

When the terminal device completes the GNSS measurement within the GNSS measurement gap, the terminal device may report the GNSS validity duration or the remaining GNSS validity duration after the GNSS measurement gap, or the terminal device may report the GNSS validity duration or the remaining GNSS validity duration within the GNSS measurement gap. When the terminal device needs to report the GNSS validity duration or the remaining GNSS validity duration within the GNSS measurement gap, the terminal device may first request an uplink resource through random access, and report the GNSS validity duration or the remaining GNSS validity duration through the uplink resource.

The remaining GNSS validity duration may be determined based on the GNSS validity duration and a reference time. For example, the reference time may be determined based on a time of reporting the GNSS validity duration or the remaining GNSS validity duration. For example, when the GNSS validity duration determined by the terminal device is 20s, and 5s passes from a moment at which the terminal device completes the GNSS measurement to a reporting moment, the remaining GNSS validity duration may be 15s. For another example, when determining the remaining GNSS validity duration, the terminal device may consider a transmission delay between the network device and the terminal device. A manner of reporting the remaining GNSS validity duration is not limited in this embodiment of this application. Reporting the GNSS validity duration or the remaining GNSS validity duration in this embodiment of this application is merely an example. For example, the terminal device may indicate the GNSS validity duration by reporting an index of the GNSS validity duration or a difference between the GNSS validity duration and a reference value. A specific reporting form is not limited in this embodiment of this application. For ease of description, reporting the GNSS validity duration is used as an example in the following specific examples, but should not be construed as a limitation on this embodiment of this application.

303: The first communication apparatus enters an idle state when the first communication apparatus does not complete the GNSS measurement within the GNSS measurement gap.

That the GNSS measurement is not completed may also be referred to as that the GNSS measurement fails, or the terminal device does not obtain the valid GNSS information. For example, the terminal device may enter the idle state after the GNSS measurement gap ends (for example, after an end moment of the GNSS measurement gap).

In a specific implementation, the method shown in FIG. 3a may include step 301 and step 302; or include step 301 and step 303; or include step 301 to step 303. For example, the terminal device performs step 302 in some scenarios, and performs step 303 in some other scenarios.

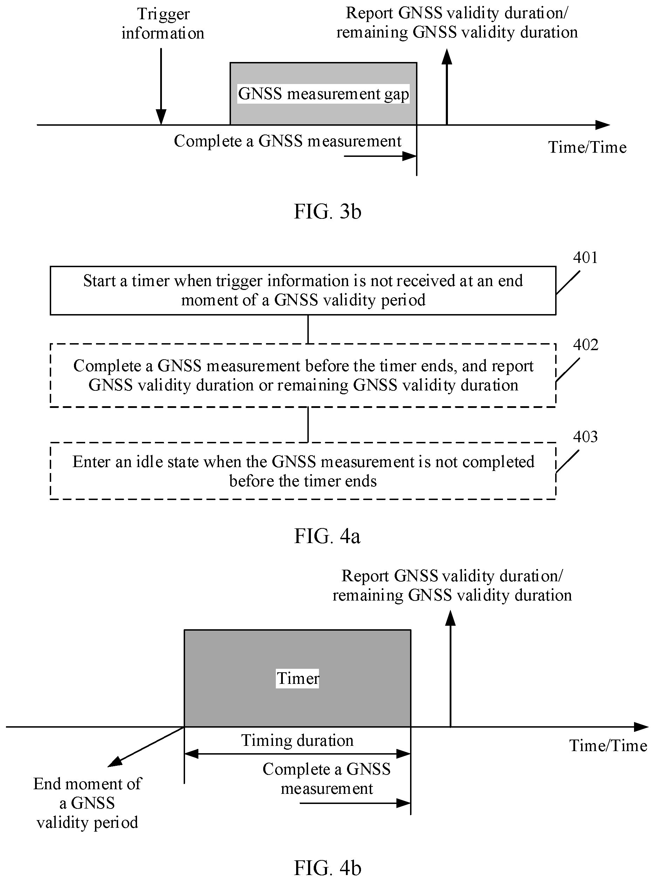

FIG. 3b shows an example in which the terminal device completes the GNSS measurement within the GNSS measurement gap. As shown in FIG. 3b, an upward arrow represents information reported by the terminal device, and a downward arrow represents information received by the terminal device. A latest time at which the terminal device completes the GNSS measurement may be the end moment of the GNSS measurement gap.

The GNSS measurement gap in this embodiment of this application may also be measured by using a timer. For example, a length of the GNSS measurement gap may be equal to a length of the timer. Similarly, the timer shown below may also be measured by using the GNSS measurement gap, or may be represented by using other similar time measurement information.

In this embodiment of this application, when the terminal device receives the trigger information, the GNSS information of the terminal device is still in a validity period. When the terminal device completes the GNSS measurement within the GNSS measurement gap, the terminal device obtains new GNSS information. Therefore, the terminal device can still keep uplink synchronization. In this way, duration in which the terminal device maintains a connection is prolonged.

### GNSS measurement mechanism 2:

FIG. 4a is a diagram of a method of another GNSS measurement mechanism according to an embodiment of this application. As shown in FIG. 4a, the method includes the following steps.

401: A first communication apparatus starts a timer when the first communication apparatus does not receive trigger information at an end moment of a GNSS validity period.

For related descriptions of the trigger information, refer to FIG. 3a. Details are not described herein again.

When the trigger information is not received at the end moment of the GNSS validity period, it indicates that information that triggers a terminal device to perform a GNSS measurement is not received within GNSS validity duration, or a terminal device does not receive the trigger information before the GNSS validity period expires. That the trigger information is not received at the end moment of the GNSS validity period indicates that the terminal device does not receive the trigger information before the end moment of the GNSS validity period. In this case, the first communication apparatus may start the timer. For example, a start condition of the timer may be that the terminal device does not receive the trigger information before the end moment of the GNSS validity period. The timer may be started at an end moment of the GNSS validity duration, or may be started when the GNSS validity period expires, or may be started at the end moment of the validity period of the GNSS information.

In an example, timing duration (or referred to as a length of the timer) of the timer may be defined in a protocol, or may be configured by a network device for the terminal device by using radio resource control (radio resource control, RRC) signaling or MAC-CE signaling.

In another example, timing duration of the timer may not be fixed (for example, may not be a fixed value defined in a protocol). For example, the start condition of the timer is that the GNSS validity period expires, and a stop condition is an end moment of an inactive state. The stop condition shown herein may be defined in a protocol, or configured by a network device, or the like. This is not limited in this embodiment of this application.

In still another example, the terminal device may determine an end moment of the timer based on an end moment of a C-DRX inactive state of the terminal device. For example, the end moment of the timer may be the same as the end moment of the C-DRX inactive state.

402: The first communication apparatus completes the GNSS measurement before the timer ends, and reports GNSS validity duration or remaining GNSS validity duration.

For example, when the terminal device completes the GNSS measurement before the timer ends, the terminal device may report the GNSS validity duration or the remaining GNSS validity duration after the end moment of the timer or within the timing duration of the timer. For related descriptions of completing the GNSS measurement and reporting the GNSS validity duration or the remaining GNSS validity duration, refer to step 302 in FIG. 3a. Details are not described herein again.

In this embodiment of this application, the timing duration of the timer includes the end moment of the timer.

403: The first communication apparatus enters an idle state when the GNSS measurement is not completed before the timer ends.

For example, when the GNSS measurement is not completed within the timing duration of the timer, the terminal device may enter the idle state within the timing duration of the timer, or enter the idle state after the end moment of the timer. For related descriptions of the GNSS measurement that is not completed, refer to step 303 in FIG. 3a. Details are not described herein again.

In a specific implementation, the method shown in FIG. 4a may include step 401 and step 402; or include step 401 and step 403; or include step 401 to step 403. For example, the terminal device performs step 402 in some scenarios, and performs step 403 in some other scenarios.

FIG. 4b shows an example in which a terminal device completes a GNSS measurement within timing duration of a timer. As shown in FIG. 4b, an upward arrow indicates that information reported by the terminal device indicates that a latest time at which the terminal device completes the GNSS measurement may be the end moment of the timer. A start moment of the timer may overlap the end moment of the GNSS validity period.

In this embodiment of this application, the terminal device starts the timer at the end moment of the GNSS validity period, and performs the GNSS measurement within the timing duration of the timer. When the GNSS measurement is completed within the timing duration of the timer, the terminal device may obtain new GNSS information. Therefore, the terminal device may still maintain uplink synchronization. In this way, duration in which the terminal device maintains a connection is prolonged.

### GNSS measurement mechanism 3:

In a C-DRX inactive state, a first communication apparatus may determine at least one of the following: time of performing a GNSS measurement, a quantity of times of performing the GNSS measurement, and duration in which one GNSS measurement is performed.

### GNSS measurement mechanism 4:

In a C-DRX inactive state, a first communication apparatus may determine time of performing a GNSS measurement, and a quantity of times of performing the GNSS measurement, and a timer determines duration of the GNSS measurement. For example, a terminal device may complete the GNSS measurement before timing duration of the timer ends, or a latest moment at which the terminal device completes the GNSS measurement may be an end moment of the timer.

In this embodiment of this application, the terminal device performs the GNSS measurement in the C-DRX inactive state. In this way, resources (for example, resources occupied because the timer is started) occupied when the terminal device performs the GNSS measurement in an active state can be effectively reduced, thereby effectively saving resources in the active state.

In the following satellite communication method, a first communication apparatus may be a terminal device, a chip disposed in the terminal device, a functional module in the terminal device, or the like, and a second communication apparatus may be a network device, a chip disposed in the network device, or a functional module in the network device. As described above, the network device may include an access network device, a functional module, or the like in an O-RAN architecture. For detailed descriptions of the terminal device and the network device, refer to FIG. 1 and FIG. 2a to FIG. 2c. Details are not described herein again. For ease of description, in embodiments of this application, the terminal device and the network device may be used as examples for description in specific examples. However, the examples should not be construed as a limitation on embodiments of this application.

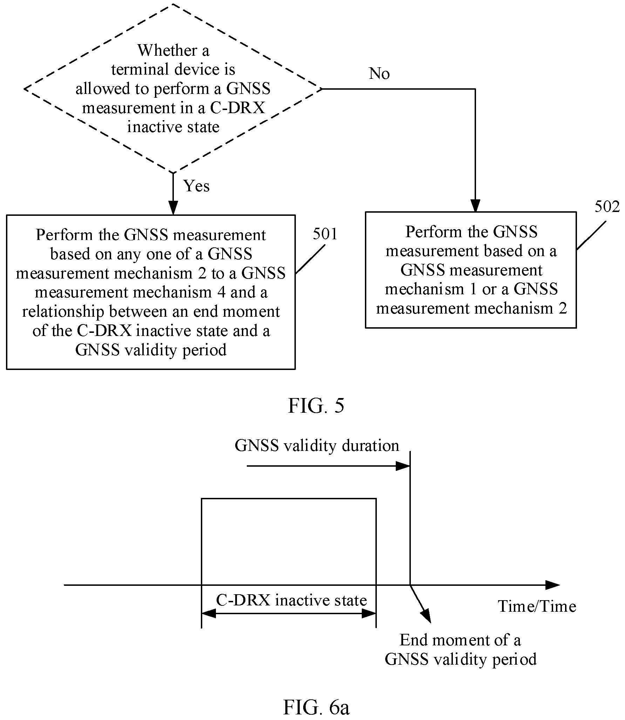

FIG. 5 is a schematic flowchart of a satellite communication method according to an embodiment of this application. As shown in FIG. 5, the method includes the following steps.

501: When a terminal device is allowed to perform a GNSS measurement in a C-DRX inactive state, the terminal device may perform the GNSS measurement based on any one of a GNSS measurement mechanism 2 to a GNSS measurement mechanism 4 and a relationship between an end moment of the C-DRX inactive state and a GNSS validity period.

502: When a terminal device is not allowed to perform a GNSS measurement in a C-DRX inactive state, the terminal device may perform the GNSS measurement based on a GNSS measurement mechanism 1 or a GNSS measurement mechanism 2.

For example, when the terminal device is allowed to perform the GNSS measurement in the C-DRX inactive state, the terminal device may perform the GNSS measurement in the C-DRX inactive state based on the GNSS measurement mechanism 2; or when the terminal device is not allowed to perform the GNSS measurement in the C-DRX inactive state, the terminal device may perform the GNSS measurement in an active state based on the GNSS measurement mechanism 2.

Whether the terminal device is allowed to perform the GNSS measurement in the C-DRX inactive state may be defined in a protocol, or may be configured by a network device.

In an example, that the terminal device is allowed to perform the GNSS measurement in the C-DRX inactive state may be defined in the protocol.

In another example, the network device may configure, based on configuration information, that the terminal device is allowed to perform the GNSS measurement in the C-DRX inactive state.

In still another example, a broadcast message of the network device may indicate whether the terminal device is allowed to perform the GNSS measurement in the C-DRX inactive state.

In still another example, it may be considered by default that the terminal device is allowed to perform the GNSS measurement in the C-DRX inactive state. In this case, when the terminal device is not allowed to perform the GNSS measurement in the C-DRX inactive state, the network device may indicate, based on related information, that the terminal device is not allowed to perform the GNSS measurement in the C-DRX inactive state.

In still another example, whether the terminal device is allowed to perform the GNSS measurement in the C-DRX inactive state may alternatively be determined based on the relationship between the end moment of the C-DRX inactive state and the GNSS validity period. For example, when the end moment of the C-DRX inactive state is within the GNSS validity period (for example, the end moment of the C-DRX inactive state is not later than an end moment of the GNSS validity period), the terminal device may not be allowed to perform the GNSS measurement in the C-DRX inactive state, or the terminal device may be allowed to perform the GNSS measurement in the C-DRX inactive state. For another example, when the end moment of the C-DRX inactive state is outside the GNSS validity period (for example, the end moment of the C-DRX inactive state is later than an end moment of the GNSS validity period), the terminal device may be allowed to perform the GNSS measurement in the C-DRX inactive state. An example in which the end moment of the C-DRX inactive state is within the GNSS validity period, including the end moment of the C-DRX inactive state is shown above. For example, that the end moment of the C-DRX inactive state is within the GNSS validity period may also include that the end moment of the C-DRX inactive state is later than the end moment of the GNSS validity period, and that the end moment of the C-DRX inactive state is outside the GNSS validity period may also include that the end moment of the C-DRX inactive state is not earlier than the end moment of the GNSS validity period. Similar descriptions are also applicable below.

In still another example, when whether the terminal device is allowed to perform the GNSS measurement in the C-DRX inactive state is determined based on the relationship between the end moment of the C-DRX inactive state and the GNSS validity period, the network device may configure a correspondence between the foregoing relationship and whether the terminal device is allowed to perform the GNSS measurement in the C-DRX inactive state, or the terminal device may determine a correspondence between the foregoing relationship and whether the terminal device is allowed to perform the GNSS measurement in the C-DRX inactive state. For example, when the end moment of the C-DRX inactive state is within the GNSS validity period, the network device may configure (or the terminal device determines) that the terminal device is not allowed to perform the GNSS measurement in the C-DRX inactive state. For another example, when the end moment of the C-DRX inactive state is outside the GNSS validity period, the network device may configure (or the terminal device determines) that the terminal device is allowed to perform the GNSS measurement in the C-DRX inactive state. For example, a priority configured by the network device may be higher than a priority determined by the terminal device. For example, when the network device does not configure the foregoing correspondence, the terminal device may determine the foregoing correspondence.

In still another example, when the terminal device is allowed to perform the GNSS measurement in the C-DRX inactive state, the network device may further configure that the terminal device may perform the GNSS measurement based on which one of the GNSS measurement mechanism 2 to the GNSS measurement mechanism 4.

In still another example, when the terminal device is allowed to perform the GNSS measurement in the C-DRX inactive state, it may be considered by default that the terminal device may perform the GNSS measurement based on a GNSS measurement mechanism 3 or the GNSS measurement mechanism 4.

In still another example, when the terminal device is allowed to perform the GNSS measurement in the C-DRX inactive state, it may be defined in a protocol, or may be configured by the network device, or the terminal device determines when to report GNSS validity duration or remaining GNSS validity duration.

The examples shown herein may be combined with implementations or examples shown below. For specific descriptions of the combination, details are not described herein again.

When the terminal device is allowed to perform the GNSS measurement in the C-DRX inactive state, the terminal device may execute any one of the GNSS measurement mechanism 2 to the GNSS measurement mechanism 4 shown above based on the relationship between an end moment of the C-DRX inactive state and an end moment of the GNSS validity period. For specific descriptions of the solution, refer to the following descriptions. Details are not described herein.

For related descriptions of the GNSS measurement mechanism 1 to the GNSS measurement mechanism 4, refer to the foregoing descriptions. Details are not described herein again.

In this embodiment of this application, a behavior of the terminal device may be configured by the network device or may be defined in a protocol, and the terminal device is allowed to have specific flexibility. In this way, behavior alignment between two communication parties can be ensured, and behavior flexibility of the terminal device can also be ensured.

In the method shown in FIG. 5, step 501 and step 502 may be independent embodiments, or step 501 and step 502 may be combined into a complete embodiment. For example, in some scenarios, the terminal device may perform step 501. For another example, in some other scenarios, the terminal device may perform step 502.

Implementations or examples shown below may be combined with the method shown in FIG. 5, or may be an independent embodiment. Specific combination manners are not described in detail below.

The following further describes the satellite communication method provided in embodiments of this application by using an example in which a terminal device is allowed to perform a GNSS measurement in a C-DRX inactive state.

FIG. 6a shows an example in which an end moment of a C-DRX inactive state is within a GNSS validity period. That the end moment of the C-DRX inactive state is within the GNSS validity period includes: An end moment of GNSS validity duration overlaps the end moment of the C-DRX inactive state, or the end moment of the C-DRX inactive state is earlier than an end moment of the GNSS validity period, or GNSS information obtained through a previous GNSS measurement is still within the validity period when the C-DRX inactive state ends. In a scenario shown in FIG. 6a, a terminal device may perform a GNSS measurement in the C-DRX inactive state.

As shown in FIG. 5, in the scenario shown in FIG. 6a, the terminal device may be allowed to perform the GNSS measurement in the C-DRX inactive state, or the terminal device may not be allowed to perform the GNSS measurement in the C-DRX inactive state. An example in which the terminal device is allowed to perform the GNSS measurement in the C-DRX inactive state is used for description.

In a possible implementation 1, the terminal device performs the GNSS measurement in the C-DRX inactive state.

For the implementation 1, there may be the following several examples:

Example 1: The terminal device completes the GNSS measurement in the C-DRX inactive state, and the terminal device may report GNSS validity duration or remaining GNSS validity duration after the C-DRX inactive state ends.

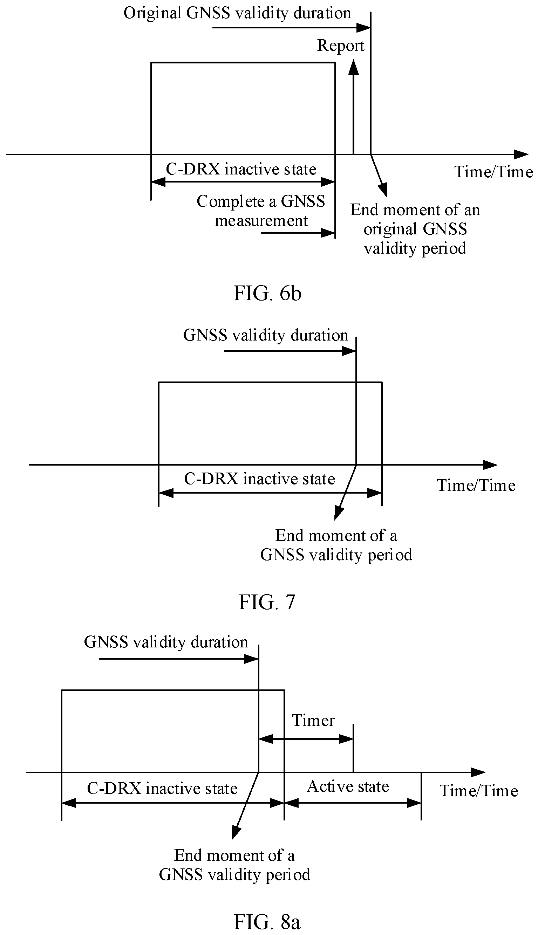

For example, the terminal device may enter an active state after the C-DRX inactive state ends, and then report the GNSS validity duration or the remaining GNSS validity duration to a network device. As shown in FIG. 6b, a latest moment at which the terminal device completes the GNSS measurement may be the end moment of the C-DRX inactive state. An original GNSS validity period or original GNSS validity duration in FIG. 6b is determined by the terminal device through the previous GNSS measurement. Reporting shown in FIG. 6b is reporting GNSS validity duration or remaining GNSS validity duration that is determined based on a current GNSS measurement.

In this embodiment of this application, when completing the GNSS measurement, the terminal device reports the GNSS validity duration or the remaining GNSS validity duration in a timely manner, so that the network device can learn of a GNSS validity period of the terminal device in a timely manner, and maintain uplink synchronization between the terminal device and the network device, thereby increasing duration in which the terminal device stays in a connected state.

Example 2: The terminal device performs the GNSS measurement in the C-DRX inactive state, and the terminal device reports GNSS validity duration or remaining GNSS validity duration after the C-DRX inactive state ends.

In Example 2, regardless of whether the terminal device completes the GNSS measurement, the terminal device may report the GNSS validity duration or the remaining GNSS validity duration. For example, even when the terminal device does not complete the GNSS measurement, the terminal device may report the remaining GNSS validity duration within a GNSS validity period after entering an active state. For another example, when the terminal device completes the GNSS measurement, the terminal device may report the GNSS validity duration or the remaining GNSS validity duration within a GNSS validity period after entering an active state.

In this embodiment of this application, the terminal device reports the remaining GNSS validity duration or the GNSS validity duration in a timely manner, so that the network device can accurately learn of GNSS information of the terminal device in a timely manner.

Example 3: The terminal device does not complete the GNSS measurement in the C-DRX inactive state, and the terminal device may enter an idle state in advance in the C-DRX inactive state.

In Example 3, when the terminal device unsuccessfully performs the GNSS measurement in the C-DRX inactive state, the terminal device may enter the idle state before the end moment of the C-DRX inactive state. For example, for a terminal device with a poor channel condition, when the terminal device does not complete the GNSS measurement in the C-DRX inactive state, the terminal device still enters an active state and performs the GNSS measurement within a GNSS validity period. In this way, the terminal device may still be unable to complete the GNSS measurement. Therefore, the terminal device may enter the idle state in advance before the end moment of the C-DRX inactive state.

Example 4: The terminal device does not complete the GNSS measurement in the C-DRX inactive state, and the terminal device may enter an idle state after the end moment of the C-DRX inactive state.

In Example 4, when the terminal device unsuccessfully performs the GNSS measurement in the C-DRX inactive state, the terminal device may enter the idle state after the end moment of the C-DRX inactive state. For example, for a terminal device with a good channel condition, when the terminal device does not complete the GNSS measurement in the C-DRX inactive state, the terminal device still enters an active state and performs the GNSS measurement within a GNSS validity period. In this way, a success probability can be effectively increased. Therefore, the terminal device may enter the idle state after the end moment of the C-DRX inactive state.

Example 5: When the GNSS measurement is not completed in the C-DRX inactive state, the terminal device may start a timer at an end moment of a GNSS validity period after the end moment of the C-DRX inactive state, to perform the GNSS measurement again. When the GNSS measurement is completed before an end moment (including the end moment of the timer) of the timer, GNSS validity duration or remaining GNSS validity duration is reported. When the GNSS measurement is still not completed at the end moment of the timer, an idle state is entered.

For related descriptions of Example 5, refer to FIG. 4a or FIG. 4b. Details are not described herein again.

Example 6: Although the terminal device may perform the GNSS measurement in the C-DRX inactive state, the terminal device does not perform the GNSS measurement.

In Example 6, the terminal device may not perform the GNSS measurement due to a reason such as that the terminal device has no time to perform the GNSS measurement, or a conflict with other downlink receiving. The reason shown herein is merely an example. For example, a reason why the terminal device does not perform the GNSS measurement may further include: GNSS information has not expired. Therefore, the terminal device considers that the GNSS measurement does not need to be performed.

Example 7: The terminal device may perform the GNSS measurement, or may not perform the GNSS measurement.

For example, the terminal device may perform the GNSS measurement when a time difference between the end moment of the C-DRX inactive state and the end moment of the GNSS validity period is small (for example, after the terminal device enters an active state, GNSS information obtained through the previous measurement is to expire immediately). For another example, a moving speed of the terminal device suddenly changes, and the terminal device may also perform the GNSS measurement. For another example, the terminal device may not perform the GNSS measurement when the time difference between the end moment of the C-DRX inactive state and the end moment of the GNSS validity period is large.

Example 8: The terminal device may perform the GNSS measurement when a time difference (which may also be referred to as remaining GNSS validity duration) between the end moment of the C-DRX inactive state and the end moment of the GNSS validity period is less than a threshold.

The terminal device may not perform the GNSS measurement if the remaining GNSS validity duration is greater than a threshold.

Example 1 to Example 8 may also be combined with each other. For example, Example 1 may be combined with Example 7 or Example 8. For another example, Example 2 may be combined with Example 7 or Example 8. For another example, Example 3 may be combined with Example 7 or Example 8. For another example, Example 4 may be combined with Example 7 or Example 8. For another example, Example 5 may be combined with Example 7 or Example 8. Specific combination manners are not enumerated herein.

FIG. 7 shows an example in which an end moment of a C-DRX inactive state is outside a GNSS validity period. That the end moment of the C-DRX inactive state is outside the GNSS validity period may include that an end moment of GNSS validity duration is earlier than the end moment of the C-DRX inactive state (or referred to as that the end moment of the C-DRX inactive state is later than an end moment of the GNSS validity period), or a terminal device is still in the C-DRX inactive state when the GNSS validity period expires.

In another possible implementation 2, the terminal device may start a timer at the end moment of the GNSS validity period, to perform the GNSS measurement. An end moment of the timer may be within an active state of the terminal device (or is referred to as that the timer lasts until the active state of the terminal device ends). As shown in FIG. 8a, the end moment of the timer is in the active state of the terminal device.

For the implementation 2, there may be the following several examples:

Example 1: The terminal device starts the timer to perform the GNSS measurement, and the terminal device completes the GNSS measurement within timing duration of the timer. In this case, the terminal device may report GNSS validity duration or remaining GNSS validity duration after the timer ends.

In this example, there may be the following several cases: The terminal device completes the GNSS measurement in advance before the end moment of the timer; or the terminal device completes the GNSS measurement at the end moment of the timer. When the terminal device completes the GNSS measurement within the timing duration of the timer is not limited in this embodiment of this application.

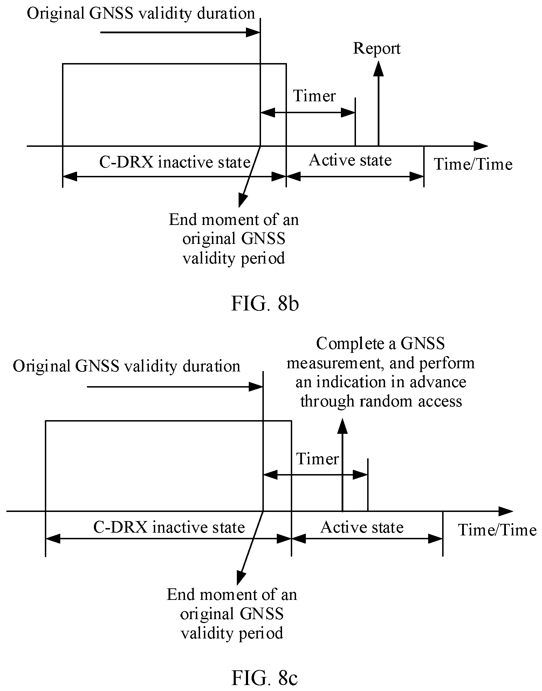

As shown in FIG. 8b, because the end moment of the timer is in the active state of the terminal device, after the end moment of the timer, the terminal device may report GNSS validity duration or remaining GNSS validity duration to a network device. For related descriptions of an end moment of an original GNSS validity period and original GNSS validity duration in FIG. 8b, refer to the descriptions in FIG. 6b. Details are not described herein again.

Example 2: The terminal device starts the timer to perform the GNSS measurement, the terminal device completes the GNSS measurement in advance before the end moment of the timer, and the terminal device has been in an active state when completing the GNSS measurement. In this case, the terminal device may indicate, to a network device through random access, that the terminal device has completed the GNSS measurement.

For example, as shown in FIG. 8c, when the timer is still running, the terminal device completes the GNSS measurement, and a time at which the GNSS measurement is completed is within a time period in which the terminal device is in the active state. In this case, the terminal device may indicate at least one of the following information through random access: The terminal device completes the GNSS measurement in advance within timing duration of the timer, and the terminal device requests an uplink resource to report GNSS validity duration or remaining GNSS validity duration within the timing duration of the timer. For example, that the terminal device sends random access to the network device within the timing duration of the timer may indicate that the terminal device has completed the GNSS measurement in advance. Usually, the network device may learn of a time period in which the terminal device is in the inactive state and the time period in which the terminal device is in the active state. When the network device receives random access in the active state, it indicates that the terminal device has completed the GNSS measurement. For another example, 1-bit indication information may be carried in random access, and the indication information may indicate that the terminal device has completed the GNSS measurement in advance. For another example, the terminal device may indicate, through random access, that the terminal device has completed the GNSS measurement, and then the terminal device may report the GNSS validity duration or the remaining GNSS validity duration after the end moment of the timer.

For example, when the timer does not end and the terminal device has completed the GNSS measurement, the time at which the GNSS measurement is completed is in the active state of the terminal device, and a time difference between the time at which the GNSS measurement is completed and the end moment of the timer is large, for example, the time difference is greater than duration, the terminal device may perform related steps shown in FIG. 8c. Details are not described herein again. The duration shown herein may be configured by the network device, or may be defined in a protocol. This is not limited in this embodiment of this application. For example, the duration may be 12 milliseconds.

An example in which random access indicates that the terminal device has completed the GNSS measurement is used above. In a specific implementation, the terminal device may alternatively indicate, to the network device through a preconfigured uplink (uplink, UL) grant (pre-configured UL grant, PUR), that the terminal device has completed the GNSS measurement.

Example 3: The terminal device starts the timer to perform the GNSS measurement, the terminal device completes the GNSS measurement in advance before the end moment of the timer, and the terminal device is still in the inactive state when completing the measurement. In this case, after entering an active state, the terminal device may indicate, to a network device through random access, that the terminal device has completed the GNSS measurement.

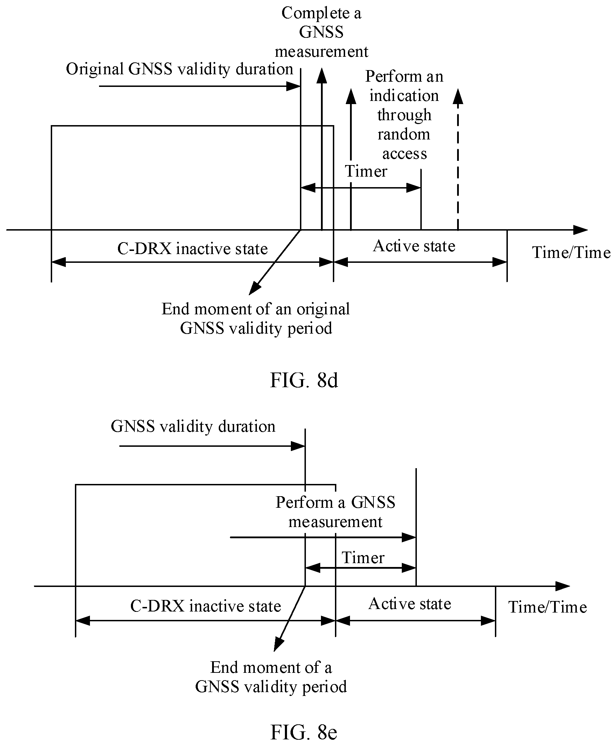

For example, as shown in FIG. 8d, when the timer does not end and the terminal device has completed the GNSS measurement, and a time at which the GNSS measurement is completed is in the inactive state of the terminal device, when entering the active state, the terminal device may indicate at least one of the following information to the network device through random access: The terminal device completes the GNSS measurement in advance before the end moment of the timer, and the terminal device requests an uplink resource to report GNSS validity duration or the remaining GNSS validity duration. As shown in a solid line part in FIG. 8d, the terminal device may indicate the foregoing information in advance through random access within timing duration of the timer after entering the active state. Alternatively, as shown in a dashed line part in FIG. 8d, the terminal device may indicate the foregoing information in advance through random access after the end moment of the timer.

Example 4: In the time of the C-DRX inactive state, regardless of when the terminal device starts to perform the GNSS measurement, an end moment at which the terminal device completes the GNSS measurement is determined based on the end moment of the timer. The timer may be started at the end moment of the GNSS validity period.

In an example, that an end moment at which the terminal device completes the GNSS measurement is determined based on the end moment of the timer includes: The end moment at which the terminal device completes the GNSS measurement is the same as the end moment of the timer. As shown in FIG. 8e, regardless of when the terminal device determines to start to perform the GNSS measurement, the end moment of performing the GNSS measurement is at the end moment of the timer. For example, after the timer ends, the terminal device may report the GNSS validity duration or remaining GNSS validity duration (for example, report GNSS validity duration or remaining GNSS validity duration determined through a current GNSS measurement). Therefore, regardless of which GNSS measurement mechanism is used by the terminal device to perform the GNSS measurement, the network device may receive, in a same time period, the GNSS validity duration or the remaining GNSS validity duration reported by the terminal device. The same time period shown herein indicates a time period after the timer ends. For example, the time period may be less than or equal to a duration threshold. A specific time period is not limited in this embodiment of this application.

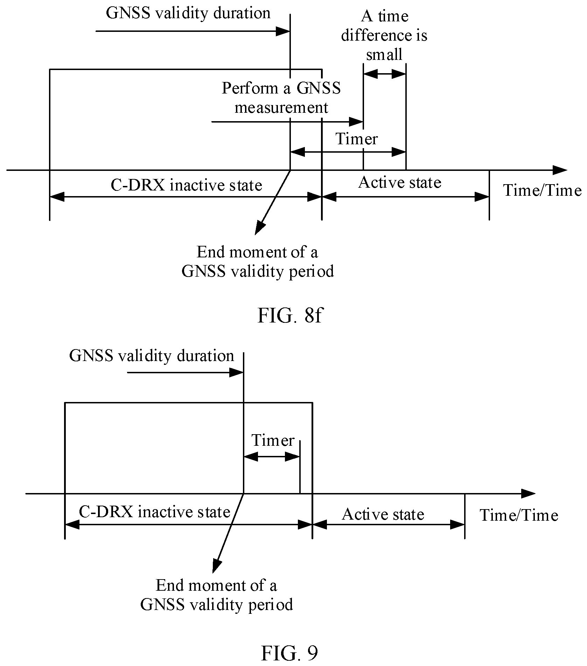

In another example, that the end moment at which the terminal device completes the GNSS measurement is determined based on an end moment of timing duration of the timer includes: The end moment at which the terminal device completes the GNSS measurement is earlier than the end moment of the timer, and a time difference between the end moment at which the terminal device completes the GNSS measurement and the end moment of the timer is small, for example, less than or equal to a threshold. As shown in FIG. 8f, regardless of when the terminal device determines to start to perform the GNSS measurement, the end moment of performing the GNSS measurement is earlier than the end moment of the timer, and a time difference between the end moment of performing the GNSS measurement and the end moment of the timer is less than or equal to the threshold. For example, before the timing duration of the timer ends, the terminal device may indicate at least one of the following information to the network device through random access: The terminal device completes the GNSS measurement in advance within the timing duration of the timer, and the terminal device requests an uplink resource to report the GNSS validity duration or remaining GNSS validity duration within the timing duration of the timer.

In still another example, when a time difference between the end moment of the GNSS validity period and the end moment of the C-DRX inactive state is large, the terminal device may complete the GNSS measurement before the end moment (including the end moment) of the C-DRX inactive state. For example, a moment at which the terminal device starts to perform the GNSS measurement is not limited, provided that one GNSS measurement can be completed before the end moment of the C-DRX inactive state.

Example 5: The terminal device may enter an idle state in advance when the terminal device does not complete the GNSS measurement within timing duration of the timer, or the terminal device enters an idle state after the end moment of the timer, or a latest time at which the terminal device enters an idle state is the end moment of the timer.

For example, the content shown in Example 5 may be agreed on in a protocol.

Example 1 to Example 5 may also be combined with each other. For example, Example 1 may be combined with Example 4. For another example, Example 2 may be combined with Example 4. Specific combination manners are not enumerated herein.

In still another possible implementation 3, a terminal device may start a timer at an end moment of a GNSS validity period, and an end moment of the timer is in a C-DRX inactive state of the terminal device (including a case in which the end moment of the timer overlaps an end moment of the inactive state). As shown in FIG. 9, the end moment of the timer is in the C-DRX inactive state of the terminal device. The end moment of the timer does not extend to an active state of the terminal device.

For the implementation 3, there may be the following several examples:
Example 1: The terminal device enters an idle state when the terminal device does not complete a GNSS measurement (for example, no valid GNSS information is obtained) before the end moment (including the end moment) of the C-DRX inactive state.

For example, the terminal device may enter the idle state at the end moment of the inactive state.

Example 2: When the terminal device does not complete a GNSS measurement at the end moment of the timer, the terminal device enters an idle state after the end moment of the timer.

Even when the C-DRX inactive state of the terminal device does not end, the terminal device enters the idle state provided that the terminal device does not complete the GNSS measurement before the timer ends.

Example 3: The terminal device completes a GNSS measurement within timing duration of the timer, and after the end moment of the timer, the terminal device may report GNSS validity duration or remaining GNSS validity duration.

Example 4: The terminal device completes a GNSS measurement within timing duration of the timer, and the terminal device indicates at least one of the following information to a network device through random access within the timing duration of the timer: The terminal device completes the GNSS measurement in advance within the timing duration of the timer, and the terminal device requests an uplink resource to report GNSS validity duration or remaining GNSS validity duration within the timing duration of the timer.

Example 5: The terminal device performs a GNSS measurement before the end moment (including the end moment) of the C-DRX inactive state.

In an example, the terminal device may still perform the GNSS measurement after the end moment of the timer and before the end moment of the C-DRX inactive state.

In another example, at the end moment of the GNSS validity period, the terminal device may start the timer to perform the GNSS measurement, and prolong the end moment of the timer to the end moment of the C-DRX inactive state. For example, the terminal device does not need to prolong the timing duration of the timer when the terminal device completes the GNSS measurement within timing duration defined in a protocol or set by a network device. For example, the terminal device may prolong the timing duration of the timer when the terminal device does not complete the GNSS measurement within the timing duration defined in the protocol or set by the network device. The end moment of the timer may be the end moment of the C-DRX inactive state. The terminal device may enter an idle state if the terminal device still does not complete the GNSS measurement.

In this embodiment of this application, for related descriptions of the five examples in the implementation 3, refer to the foregoing examples. Details are not described herein again. The five examples in the implementation 3 may also be combined with each other. For example, Example 5 may be combined with any one of Example 1 to Example 4. Specific combination manners are not described herein again.

In the foregoing examples, an example in which the terminal device performs one GNSS measurement is used. However, in a specific implementation, there may be further the following cases:
1. In a C-DRX inactive state, the terminal device is allowed to perform one GNSS measurement. In this case, duration of the GNSS measurement is not limited.
   Performing one GNSS measurement shown herein indicates that the terminal device performs the GNSS measurement continuously in time, or indicates that the terminal device performs the GNSS measurement on a segment of consecutive resources.
2. In a C-DRX inactive state, the terminal device is allowed to perform one GNSS measurement, and duration of the GNSS measurement is determined based on a length of a timer.
   As shown in FIG. 8a, duration in which the terminal device performs the GNSS measurement may be determined based on the length of the timer.
3. In a C-DRX inactive state, the terminal device is allowed to perform a plurality of GNSS measurements, and an accumulated time period in which the terminal device performs the plurality of GNSS measurements is determined based on a length of a timer.
   For example, the terminal device performs n GNSS measurements, and an accumulated time period is a sum of duration of the n GNSS measurements. For example, the accumulated time period may be 10s when duration in which the terminal device performs one GNSS measurement is 1s and the terminal device is allowed to perform 10 GNSS measurements. Certainly, an example in which duration of all GNSS measurements is the same is used herein. In a specific implementation, duration of at least two GNSS measurements may be different.
4. In a C-DRX inactive state, the terminal device is allowed to perform a plurality of GNSS measurements, and an accumulated time period in which the terminal device performs the plurality of GNSS measurements is less than or equal to an upper limit.
   The upper limit shown herein may be set by a network device, defined in a protocol, or the like. This is not limited in this embodiment of this application.
5. The terminal device cannot perform a GNSS measurement in a C-DRX inactive state if duration that may be used for a continuous GNSS measurement in the C-DRX inactive state does not exceed duration required for one continuous measurement.
   The duration used for the continuous GNSS measurement herein indicates accumulated duration in which the terminal device may perform a plurality of intermittent measurements in the C-DRX inactive state, or indicates accumulated duration in which the terminal device performs a plurality of GNSS measurements in the C-DRX inactive state. For the duration required for one continuous measurement, refer to the foregoing descriptions of one GNSS measurement. Details are not described herein again.
6. The terminal device may complete a GNSS measurement by performing a plurality of intermittent measurements, when duration that may be used for one continuous GNSS measurement in a C-DRX inactive state does not exceed duration required for one continuous measurement.
7. The terminal device determines a start moment of performing a GNSS measurement. For example, the terminal device may complete the GNSS measurement by performing a plurality of intermittent measurements.
8. The terminal device determines a start moment of performing a GNSS measurement. If duration that may be used for a continuous GNSS measurement in a C-DRX inactive state does not exceed duration required for one continuous measurement, the terminal device can complete the GNSS measurement by performing a plurality of intermittent measurements, and preferably select a case in which duration meets a time length of completing one GNSS measurement.

The eight cases shown herein may be combined with the foregoing examples. Specific combination manners are not enumerated herein. For example, in the examples shown above, the terminal device may perform one GNSS measurement or a plurality of GNSS measurements based on any condition in Case 1 to Case 8, or may not perform a GNSS measurement. Specific combination examples are not enumerated herein.

The following describes communication apparatuses provided in embodiments of this application.

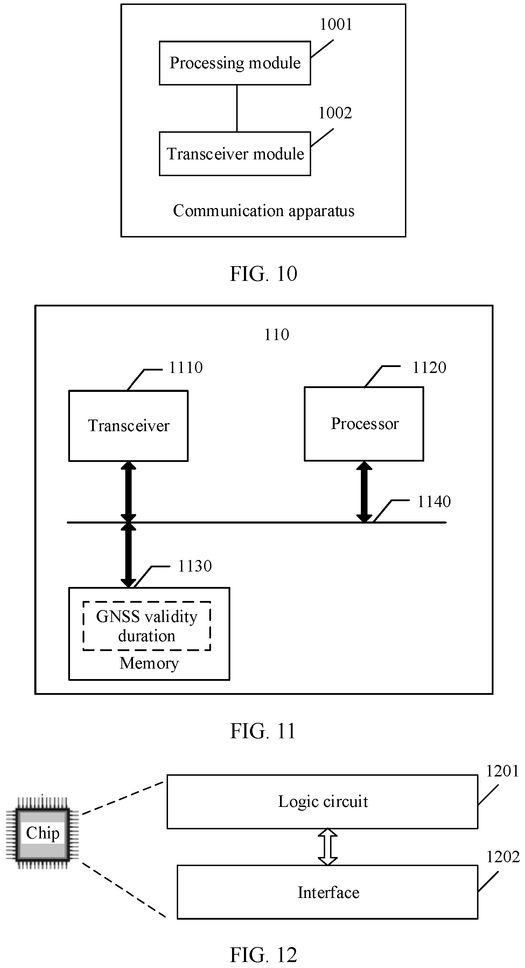

In this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into modules is an example, and is merely a logical functional division. In an actual implementation, another division manner may be used. The following describes in detail the communication apparatuses in embodiments of this application with reference to FIG. 10 to FIG. 12.

FIG. 10 is a diagram of a structure of a communication apparatus according to an embodiment of this application. As shown in FIG. 10, the communication apparatus includes a processing module 1001 and a transceiver module 1002. The transceiver module 1002 may implement a corresponding communication function, and the processing module 1001 is configured to perform data processing. For example, the transceiver module 1002 may also be referred to as an interface, a communication interface, or a communication module.

In some embodiments of this application, the communication apparatus may be configured to perform actions performed by the terminal device in the foregoing method embodiments. In this case, the communication apparatus may be the terminal device, or a component (for example, a chip, a system, or a functional module) configured in the terminal device. The transceiver module 1002 is configured to perform a receiving/sending-related operation of the terminal device in the foregoing method embodiments, and the processing module 1001 is configured to perform a processing-related operation of the terminal device in the foregoing method embodiments.

For example, the processing module 1001 is configured to determine that the communication apparatus is allowed to perform a GNSS measurement in a C-DRX inactive state, and is further configured to perform the GNSS measurement based on a relationship between an end moment of the C-DRX inactive state and a GNSS validity period.

For example, the transceiver module 1002 is further configured to input or receive trigger information. The transceiver module 1002 is further configured to send or output feedback information. The feedback information may include GNSS validity duration or remaining GNSS validity duration, or the feedback information may be information indicated through random access.

For example, the processing module 1001 is further configured to start a timer.

Optionally, in the foregoing embodiments, the communication apparatus may further include a storage module. The storage module may be configured to store instructions and/or data. The processing module 1001 may read the instructions and/or the data in the storage module, so that the communication apparatus implements the foregoing method embodiments. For example, the storage module may be configured to store the remaining GNSS validity duration or the GNSS validity duration.

For descriptions of terms, examples, or the like, refer to the descriptions in the foregoing method embodiments. Details are not described herein again.

It may be understood that specific descriptions of the transceiver module and the processing module shown in the foregoing embodiments are merely examples. For specific functions or steps performed by the transceiver module and the processing module, refer to the foregoing method embodiments. Details are not described herein again.

The foregoing describes the communication apparatus in this embodiment of this application. The following describes possible product forms of the communication apparatus. It should be understood that any form of product that has a function of the communication apparatus in FIG. 10 falls within the protection scope of embodiments of this application. It should be further understood that the following descriptions are merely an example, and do not limit a product form of the communication apparatus in embodiments of this application.

In a possible implementation, in the communication apparatus shown in FIG. 10, the processing module 1001 may be one or more processors, and the transceiver module 1002 may be a transceiver; or the transceiver module 1002 may be a sending module and a receiving module, the sending module may be a transmitter, the receiving module may be a receiver, and the sending module and the receiving module are integrated into one device, for example, a transceiver. In embodiments of this application, the processor and the transceiver may be coupled, or the like. A connection manner of the processor and the transceiver is not limited in embodiments of this application. In a process of performing the foregoing method, a process of sending information in the foregoing method may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may need to be performed on the information before processed information is input into the processor.

As shown in FIG. 11, a communication apparatus 110 includes one or more processors 1120 and a transceiver 1110.

For example, the transceiver 1110 is configured to perform functions or steps implemented by the transceiver module 1002 shown in FIG. 10, and the processor 1120 is configured to perform functions or steps implemented by the processing module 1001 shown in FIG. 10. For specific descriptions of the processor 1120 and the transceiver 1110, refer to FIG. 10 or the foregoing method embodiments. Details are not described herein again.

In each implementation of the communication apparatus shown in FIG. 11, the transceiver may include a receiver and a transmitter. The receiver is configured to perform a receiving function (or operation), and the transmitter is configured to perform a transmitting function (or operation). The transceiver is configured to communicate with another device/apparatus through a transmission medium.

Optionally, the communication apparatus 110 may further include one or more memories 1130, configured to store program instructions and/or data. The memory 1130 is coupled to the processor 1120. The coupling in this embodiment of this application may be an indirect coupling or a communication connection between apparatuses, units, or modules in an electrical form, a mechanical form, or another form, and is used for information exchange between the apparatuses, the units, or the modules. The processor 1120 may collaboratively operate with the memory 1130. The processor 1120 may execute the program instructions stored in the memory 1130. Optionally, at least one of the one or more memories may be included in the processor. In this embodiment of this application, the memory 1130 may store GNSS validity duration, a difference, an index, and the like. For example, the memory shown in FIG. 11 shows only the GNSS validity duration as an example.

In this embodiment of this application, a specific connection medium among the transceiver 1110, the processor 1120, and the memory 1130 is not limited. In this embodiment of this application, in FIG. 11, the memory 1130, the processor 1120, and the transceiver 1110 are connected to each other through a bus 1140. The bus is represented by using a thick line in FIG. 11. A manner of connection between other components is only schematically described, but is not used as a limitation. The bus may be classified into an address bus, a data bus, a control bus, and the like. For ease of representation, only one thick line is used to represent the bus in FIG. 11, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this is not limited thereto. The memory in this embodiment of this application may alternatively be a circuit or any other apparatus that can implement a storage function, and is configured to store the program instructions and/or the data.

The processor 1120 is mainly configured to process a communication protocol and communication data, control the entire communication apparatus, execute a software program, and process data of the software program. The memory 1130 is mainly configured to store the software program and the data. The transceiver 1110 may include a control circuit and an antenna. The control circuit is mainly configured to convert a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1120 may read the software program from the memory 1130, interpret and execute instructions of the software program, and process data of the software program. When data needs to be sent wirelessly, the processor 1120 performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 1120. The processor 1120 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus shown in embodiments of this application may further have more components and the like than those in FIG. 11. This is not limited in embodiments of this application. The methods performed by the processor and the transceiver are merely examples. For specific steps performed by the processor and the transceiver, refer to the methods described above.

In another possible implementation, in the communication apparatus shown in FIG. 10, the processing module 1001 may be one or more logic circuits, and the transceiver module 1002 may be an input/output interface that is also referred to as a communication interface, an interface circuit, an interface, or the like. Alternatively, the transceiver module 1002 may be a sending module and a receiving module. The sending module may be an output interface, and the receiving module may be an input interface. The sending module and the receiving module are integrated into one module, for example, an input/output interface. As shown in FIG. 12, a communication apparatus shown in FIG. 12 includes a logic circuit 1201 and an interface 1202. In other words, the processing module 1001 may be implemented through the logic circuit 1201, and the transceiver module 1002 may be implemented through the interface 1202. The logic circuit 1201 may be a chip, a processing circuit, an integrated circuit, a system on chip (system on chip, SoC), or the like. The interface 1202 may be a communication interface, an input/output interface, a pin, or the like. For example, FIG. 12 shows an example in which the communication apparatus is a chip. The chip includes a logic circuit 1201 and an interface 1202.

In this embodiment of this application, the logic circuit and the interface may be coupled to each other. A specific connection manner between the logic circuit and the interface is not limited in this embodiment of this application. For example, the logic circuit 1201 may be configured to perform the functions or the steps implemented by the processing module 1001 shown in FIG. 10, and the interface 1202 may be configured to perform the functions or the steps implemented by the transceiver module 1002 shown in FIG. 10. For specific descriptions of the logic circuit 1201 and the interface 1202, refer to FIG. 10 or the foregoing method embodiments. Details are not described herein again.

For example, the chip shown in FIG. 12 may further include a memory. The memory may be configured to store GNSS validity duration, and the like.

It may be understood that the communication apparatus shown in embodiments of this application may implement the method provided in embodiments of this application in a form of hardware, or may implement the method provided in embodiments of this application in a form of software. This is not limited in embodiments of this application.

For specific implementations of the embodiments shown in FIG. 12, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments.

In addition, this application further provides a computer program. The computer program is used to implement operations and/or processing performed by the first communication apparatus device in the methods provided in this application.

This application further provides a computer program. The computer program is used to implement operations and/or processing (for example, receiving feedback information) performed by the second communication apparatus device in the methods provided in this application.

This application further provides a computer-readable storage medium. The computer-readable storage medium stores computer code. When the computer code is run on a computer, the computer is enabled to perform operations and/or processing performed by the first communication apparatus device in the methods provided in this application.

This application further provides a computer-readable storage medium. The computer-readable storage medium stores computer code. When the computer code is run on a computer, the computer is enabled to perform operations and/or processing performed by the second communication apparatus device in the methods provided in this application.

This application further provides a computer program product. The computer program product includes computer code or a computer program. When the computer code or the computer program is run on a computer, operations and/or processing performed by the first communication apparatus device in the methods provided in this application are/is performed.

This application further provides a computer program product. The computer program product includes computer code or a computer program. When the computer code or the computer program is run on a computer, operations and/or processing performed by the second communication apparatus device in the methods provided in this application are/is performed.

In the several embodiments provided in this application, it should be understood that the disclosed system, apparatus, and method may be implemented in other manners. For example, the described apparatus embodiments are merely examples. For example, division into modules is merely logical functional division. In an actual implementation, another division manner may be used. For example, a plurality of modules or components may be combined or integrated into another system, or some features may be ignored or not performed. In addition, the displayed or discussed mutual couplings or direct couplings or communication connections may be implemented through some interfaces, indirect couplings or communication connections between the apparatuses or modules, or electrical connections, mechanical connections, or connections in other forms.

The modules described as separate parts may or may not be physically separate, and parts displayed as modules may or may not be physical modules, may be located in one position, or may be distributed on a plurality of network modules. Some or all of the modules may be selected based on an actual requirement to achieve the technical effects of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated module may be stored in a computer-readable storage medium. Based on such an understanding, the technical solutions of this application essentially, or the part contributing to a conventional technology, or all or some of the technical solutions may be implemented in a form of a software product. The computer software product is stored in a readable storage medium, and includes several instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A satellite communication method, wherein the method is applied to a first communication apparatus, and the method comprises:
determining that the first communication apparatus is allowed to perform a global navigation satellite system GNSS measurement in a connected-discontinuous reception C-DRX inactive state; and
performing, by the first communication apparatus, the GNSS measurement based on a relationship between an end moment of the C-DRX inactive state and a GNSS validity period of the first communication apparatus.

2. The method according to claim 1, wherein performing, by the first communication apparatus, the GNSS measurement based on the relationship between the end moment of the C-DRX inactive state and the GNSS validity period of the first communication apparatus comprises:
performing, by the first communication apparatus, the GNSS measurement in the C-DRX inactive state when the end moment of the C-DRX inactive state is within the GNSS validity period.

3. The method according to claim 2, wherein the method further comprises:
when the first communication apparatus completes the GNSS measurement in the C-DRX inactive state, feeding back, by the first communication apparatus, GNSS validity duration or remaining GNSS validity duration of the first communication apparatus after the C-DRX inactive state ends.

4. The method according to claim 1, wherein performing, by the first communication apparatus, the GNSS measurement based on the relationship between the end moment of the C-DRX inactive state and the GNSS validity period of the first communication apparatus comprises:
when the end moment of the C-DRX inactive state is outside the GNSS validity period, starting, by the first communication apparatus, a timer at an end moment of the GNSS validity period, and performing the GNSS measurement based on the timer.

5. The method according to claim 4, wherein when an end moment of the timer is in an active state of the first communication apparatus, an end moment at which the first communication apparatus completes the GNSS measurement is the same as the end moment of the timer.

6. The method according to claim 4, wherein when an end moment of the timer is in an active state of the first communication apparatus, the method further comprises:
feeding back, by the first communication apparatus, GNSS validity duration or remaining GNSS validity duration of the first communication apparatus after the end moment of the timer when the GNSS measurement is completed within timing duration of the timer; or
sending, by the first communication apparatus, feedback information through random access when the GNSS measurement is completed in the active state, wherein the feedback information indicates that the first communication apparatus has completed the GNSS measurement; or
when the GNSS measurement is completed in the inactive state, sending, by the first communication apparatus, feedback information through random access after entering the active state, wherein the feedback information indicates that the first communication apparatus has completed the GNSS measurement; or
when the GNSS measurement is not completed within timing duration of the timer, entering, by the first communication apparatus, an idle state, wherein a latest time at which the first communication apparatus enters the idle state is the end moment of the timer.

7. The method according to claim 4, wherein when an end moment of the timer is in the inactive state of the first communication apparatus, the method further comprises:
feeding back, by the first communication apparatus, GNSS validity duration or remaining GNSS validity duration of the first communication apparatus after the end moment of the timer when the GNSS measurement is completed within timing duration of the timer; or
entering, by the first communication apparatus, an idle state after the end moment of the timer when the GNSS measurement is not completed within timing duration of the timer.

8. The method according to claim 7, wherein the end moment of the timer is the same as the end moment of the C-DRX inactive state.

9. A communication apparatus, comprising a module configured to perform the method according to any one of claims 1 to 8.

10. A communication apparatus, comprising a processor, wherein the processor is configured to perform the method according to any one of claims 1 to 8.

11. The communication apparatus according to claim 10, wherein the communication apparatus further comprises a transceiver, and the transceiver is configured to receive a signal or send a signal.

12. The communication apparatus according to claim 10, wherein the communication apparatus comprises a chip.

13. The communication apparatus according to claim 11, wherein the communication apparatus comprises a terminal device.

14. A communication apparatus, comprising a logic circuit and an interface, wherein the logic circuit is coupled to the interface, the interface is configured to input and/or output information, and the logic circuit is configured to perform the method according to any one of claims 1 to 8.

15. A computer-readable storage medium, wherein the computer-readable storage medium is configured to store a computer program, and when the computer program is executed, the method according to any one of claims 1 to 8 is performed.

16. A computer program product, wherein the computer program product comprises a computer program, and when the computer program is executed, the method according to any one of claims 1 to 8 is performed.

17. A communication system, wherein the communication system comprises a first communication apparatus and a second communication apparatus, the first communication apparatus is configured to perform the method according to any one of claims 1 to 8, and the second communication apparatus is configured to receive feedback information.
